# EUROPEAN PATENT APPLICATION

(11) **EP 0 743 618 A2**
(43) Date of publication of application: **20.11.1996**
(21) Application number: 96303556.3
(22) Date of filing: 20.05.1996
(51) Int. Cl.: G06T 7/00, G06K 9/00

(54) **A method of and apparatus for locating a spine in a half-carcass**

(30) Priority: 19.05.1995 GB 9510171
(71) Applicant: UNIVERSITY OF BRISTOL, Clifton Bristol BS8 1TH (GB)
(72) Inventor: West David John,, St George ,Bristol,BS5 8DL, (GB); Maddock Neil Andrew,, Easton, Bristol,BS5 OJS, (GB)
(74) Representative: Hogg, Jeffery Keith

(57) **Abstract**

A vision based spine identification system is provided for identifying the path of a spine (2) within a half-carcass. Spine-like features are identified. Path analysis of the spine-like features is performed to identify a continuous run of spine-like features so as to identify the actual position of the spine (2). A further processing step is then performed by looking along the identified path of the spine in order to search for intervertebral regions. Once these have been located, the data is fitted to a model spine in order to form a representation of the spatial part of the spine. Fitting to a model allows problems with hidden parts of the spine to be overcome. The coordinates of the spine can then be used to generate instructions for an automatic butchery machine.

## Description

The present invention relates to a method of identifying a spine in a half carcass. A half carcass is a carcass which has been cut open along a plane substantially coincident with the spine and extending from the dorsal side of the carcass to the ventral side of the carcass.

If the position of vertebrae in a spine can be located it is possible to identify the line of cuts that need to be made to produce different joints of meat in an automated butchery process.

According to a first aspect of the present invention, there is provided a method of identifying regions of a spine in a half-carcass, comprising analysing an image of the half-carcass to identify the positions of a plurality of vertebral features along a spine, and comparing the positions of the vertebral features with a model of a spine so as to identify the best match between the measured positions and the model.

Preferably, the vertebral features are intervertebral regions of the spine. Alternately, or additionally, the vertebrae may be identified.

Preferably, the positions of the vertebral features are compared with the model as a function of relative longitudinal displacement and scale of the model data with respect to the measured positions.

Preferably, the path of the spine is identified by analysing the image of the half-carcass to identify those areas of the image containing a predetermined feature, or features, considered to correspond to the spine, and analysing the spatial relationship of these identified areas to select those corresponding to an expected spine shape. Additionally, an expected relationship between the position of the spine and the outside edges of the carcass may be invoked to identify the path of the spine.

Preferably, spine-like features are identified by comparing each of a plurality of portions of the image with a first reference image of a vertebral section. A vertebral section characteristically involves relatively abrupt changes in intensity and/or colour within the image. However, this first reference image may also be identified in parts of the carcass image other than the spine. For example, the rib area may also exhibit relatively abrupt changes in colour and/or image intensity.

Furthermore, parts of the spine may be obscured within the half-carcass, However, knowing that the spine forms an elongate and continuous feature within an animal, it is possible to analyze of the positions of the spine-like features within the image to identify those forming a substantially continuous sequence of such features, which are then taken to represent the spine.

Preferably, the method identifies the positions of intervertebral regions within the spine by locating the path of the spine in an image of the carcass, and searching along the path of the spine to identify the position of individual intervertebral regions along the spine.

Preferably, the identification of intervertebral regions is performed by comparing a plurality of portions of the image of the spine with a second reference image corresponding to the intervertebral region. The interface between adjacent vertebrae is substantially perpendicular to the local gradient of the spine. Thus, the path of the spine may be analyzed to determine the local gradient for each one of the plurality of portions of the image and this may be used to rotate the second reference image with respect to each portion of the image of the spine during the comparison step so as to improve the reliability of the comparison. Alternatively, a plurality of second reference images may be provided, each one exhibiting a different amount of rotation. Thus, an appropriate reference image may be selected in accordance with the local gradient of the spine.

Additionally, or alternatively, intervertebral regions may be found simply by analysing the intensity and/or colour of the image along the path of the spine. In order to improve the effectiveness of such an approach, it is desirable to average the image intensity along short lines which are perpendicular to the local gradient of the spine. Such an approach improves the detection of the intervertebral bands, as these also run perpendicular to the local gradient of the spine.

Preferably, the model of the spine comprises one or more representations of spines. Each spine may be represented by sets of vertebra lengths and angles. The model is scaled before comparison with the identified intervertebral positions, and multiple comparisons are carried out with different scaling factors to obtain the best fit. Also, the identified intervertebral regions and those of the model are compared in different longitudinal alignments, and multiple comparisons are made to find the acceptable fit.

The comparison of the measured data with the model may conveniently be performed in two processing steps. In the first model comparison step, a comparison may be made solely on the basis of intervertebral distances and longitudinal displacement. This is equivalent to assuming that the spine lies on a straight path. Such an analysis is likely to identify a plurality of acceptable fits between the measured data and the model.

A spine follows a curved path within the half carcass and the model contains information concerning the path, such as the angle between adjacent vertebrae. A second model comparison step is performed to compare each one of the plurality of acceptable fits identified in the first model comparison step with the spine path held in the model so as to identify one of the fits as being the best one. Additionally, or alternatively, other constraints may be invoked in order to determine the correct fit between the data and the model. For example, the start position of a beheaded carcass is likely to occur in the vicinity of the Atlas (first) vertebra and thus this information can be used to narrow the possible choices of fits to the model. Additionally, other features such as the position of legs, length of the carcass or position of the aitch bone, provide additional information.

The additional information or constraints may be used before the fitting process so as to reduce the parameter range that needs to be examined. Thus, information such as the length of the carcass and position of the Atlas vertebra can be used, for example, to narrow the search to a relatively small area of a parameter (i.e. scale and start position) space.

Once the position and parts of the spine have been identified, it is possible to accurately locate the line of cuts needed to separate the carcass into various cuts of meat. For example, in some pork butchery schemes the shoulder primal cut goes through the centre of the fifth thoracic vertebra. Having identified the position of the spine, this information can be used to control the cutting path of an automatic butchery tool.

According to a second aspect of the present invention, there is provided an apparatus for identifying regions of a spine in a half-carcass, comprising analysis means for analysing an image of the half carcass to identify the positions of a plurality of vertebral features along the spine, and for comparing the positions of the vertebral features with a model of a spine so as to identify acceptable matches between the measured positions and the model.

The image may be a full colour image, a monochrome image, or an image restricted to a portion of the spectrum. Viewing in some colours, such as green, can provide enhanced contrast.

The present invention will further be described, by way of example, with reference to the accompanying drawings in which:
Figure 1 is a schematic diagram of a half-carcass;
Figure 2 is a simplified diagram of a half carcass.
Figure 3 is a schematic diagram similar to Figure 2, and indicating regions that contain spine-like features;
Figure 4 schematically illustrates the carcass of Figure 2 together with the results of spine path analysis and intervertebral position analysis offset from the carcass for clarity; and
Figure 5 is a graph illustrating the position of the best fit at each scaling value between data extracted from an image of a half-carcass and representing the position of a plurality of features within a spine, and a model of the spine as a function of longitudinal displacement and scale.

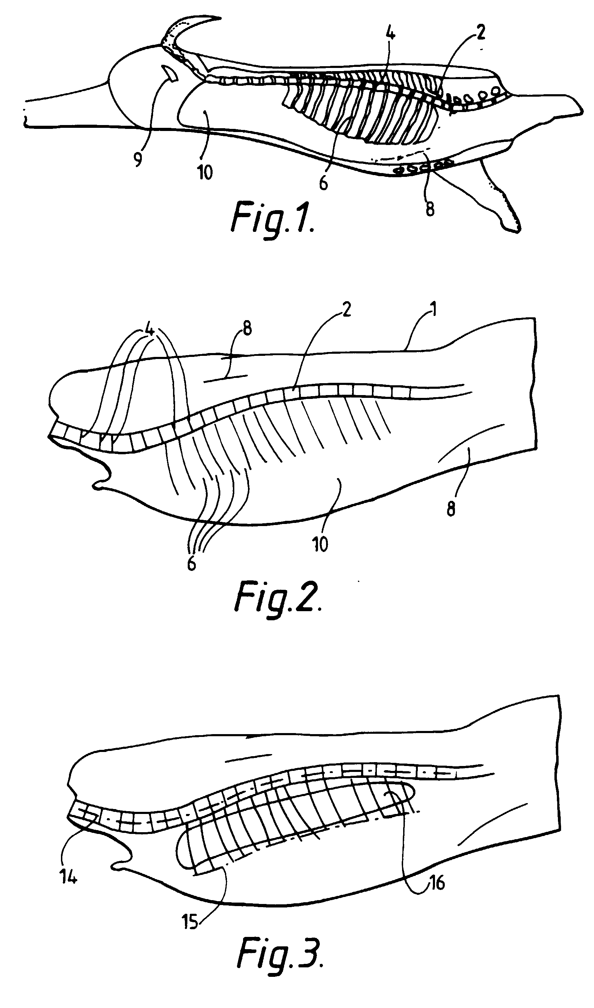

Figure 1 is a schematic illustration of a half-carcass of a pig showing the spine 2, intervertebral regions 4, ribs 6, regions of fat 8, and an aitch bone 9. The remainder 10 of the carcass is muscle tissue which can be regarded as meat. Figure 2 shows a simplified half carcass for clarity.

The position and constituent parts of the spine 2 can be identified by applying a sequence of processing steps to an image of the half-carcass as produced by a video camera, for example, while the half-carcass is held in a butchery fixture. The image may be a full colour image or may be monochrome. It has been found that analysing the green portion of a full colour image provides enhanced contrast between the portions of the spine. This is because white portions of the carcass will reflect a significant amount of green light, whereas red portions of the carcass reflect very little green light. Similar benefits can be obtained using blue light.

The first step uses pattern recognition to find areas that match a typical spine cross-section. This operation identifies areas in the image which locally resemble part of the spine 2.

An idealised image of a small section of spine is stored in a memory as a first test image. Typically, this consists of alternate light, dark, and light bands corresponding to bone, marrow, bone (marrow is observed because the spinal vertebrae become sectioned during formation of the half-carcass) and the spinal cord. This test image is compared with similarly sized areas of the real image at every position in a predefined search area. A corresponding image is created (Figure 3) in which the intensity of each point in the image is proportional to the closeness of the match at the corresponding point in the search area. Note that only a local resemblance is required to produce a strong response in the corresponding image so that some of the indicated areas will not actually be part of the spine. Referring to Figure 3, the chain-dot lines 14,15 indicate the paths of a good match between the first test image and the image of the half-carcass 1. The region 16 indicates an area of the image of the half-carcass that contains moderate matches to the first test image. Clearly, not all of these regions can be the spine. A second processing step is commenced to identify the spine 2.

One of the attributes of the spine 2 is that it is (or should be) a continuous feature across the image of the half-carcass 1. The second processing step, applied to the output of the first processing step finds the most continuous path of good matches across the image.

Pixel intensity values are accumulated across the corresponding image, the value of each pixel consisting of its own intensity plus the weighted sum of the already accumulated values of the pixels in an adjacent column. Thus, for example, if the image is notionally divided into a plurality of horizontal rows and vertical columns, a tracking image can be formed by setting each pixel of the tracking image to a weighted sum of the value of the equivalent pixel in the corresponding image and the pixels of the preceding column that border the pixel in the tracking image. Thus, if the pixels are considered as having positions denoted by coordinates X and Y where X and Y are integers, the value of a pixel at a position P₁ (X,Y) in the tracking image is formed from a weighted sum of pixels at positions (X,Y) from the corresponding image, and (X-1,Y+1), (X-1,Y) and (X-1,Y-1) from the tracking image. The summation process is performed from one side of the image to the other (in the direction of increasing values of X) The value accumulated after a run of consecutive bright pixels is higher than that for areas of dark pixels or isolated bright spots. The pixel with the highest value is therefore the one occurring last in the most continuous run of high value pixels. Using this pixel as the start-point, the run of pixels leading to it can be tracked backwards, the next pixel backwards always being that one which contributed the most to the value of the current pixel.

Alternatively, a different type of tracking algorithm can be used to track along the high-value ridge in the output from the first processing step starting with the highest value pixel as the start-point described above. This operation finds the most continuous path of spine-like points across the image. In fact, it can continue to track after the end of the spine has been reached, the only indication that this is the case being the lessening of the closeness-of-match values. The position of the spine may also be identified by comparing the positions of the regions which match the test image with the expected position of a spine having regard to the shape and size of the carcass.

Following completion of this step, the method correctly identifies the chain-dot line 14 as corresponding to the path of the spine 2. Butchery fixtures (not shown) holding the carcass may partially obscure the spine. In such cases the path of the spine either side of the fixture may be identified in separate identification steps.

In order to find the position of the spine along the line of spine-like points, and also, once this has been achieved, to locate particular positions along the spine, the positions of the bands of intervertebral cartilage are found in a further processing step.

This is performed in a similar fashion to the first pattern recognition operation except that idealised images of the intervertebral bands are used as the test image. As the intervertebral bands must lie on the spine, it is only necessary to search long the path of line 14 identified in the second processing step. Further, at each point along this path the slope of the path can be found and used to select one from a range of idealised images of intervertebral bands at different angles. In this way, the sensitivity of the process can be improved.

The intervertebral cartilage could be found by sampling the resulting image intensities along the spine path. The result of this operation is effectively a histogram of the probability of finding an intervertebral band at each location along the spine path. Unfortunately, it is generally a very noisy histogram with some false peaks and some missing peaks. To further improve the sensitivity, the image intensity values are averaged along short lines perpendicular to the spine path. Since the intervertebral bands are perpendicular to the path of the spine, this method improves the detection of these bands.

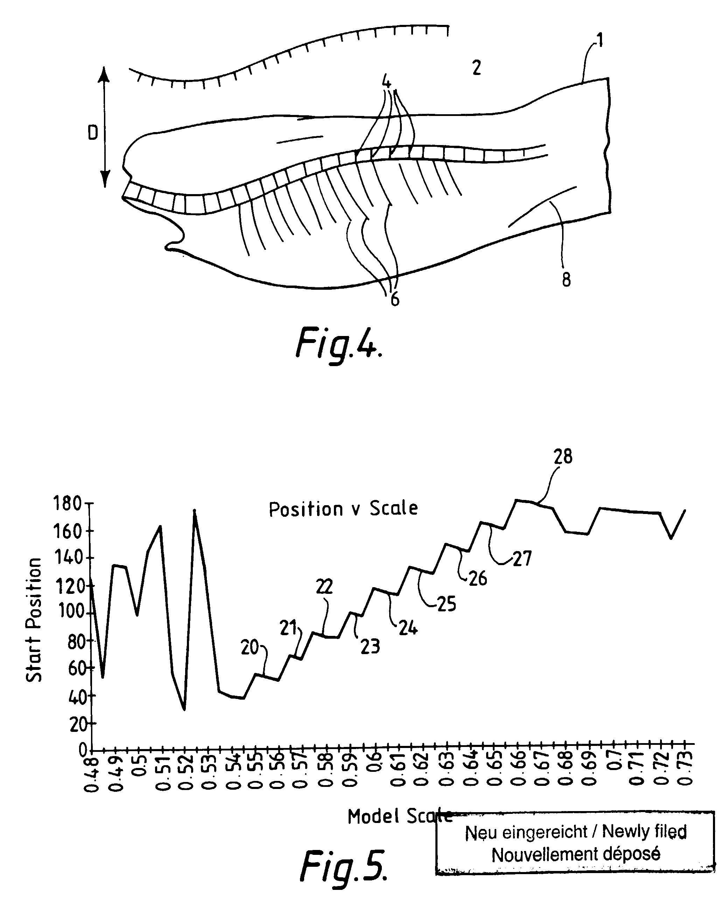

Figure 4 illustrates the path of the spine 2 and the positions of the intervertebral bands following completion of the third processing step. The results obtained from the method thus far have been drawn offset from the half-carcass by a distance D for clarity.

Because parts of the spine may be obscured (particularly in the region of the last lumbar vertebra) and the intervertebral cartilage may not be visible in places, a model of the spine 2 is used to extrapolate or interpolate from the data that are actually present. It is then necessary to find the magnification, position and angle of the model which will map it onto the spine in the image.

The model consists of a set of vertebra lengths and angles. Possible combinations of magnification and start position for the model are found by comparing the positions of vertebral joins in the model with the positions of the identified intervertebral positions. This is achieved by searching through a range of values of scale and start position and measuring the closeness of fit for each combination of the two variables.

The fitting of the model to the data can occur in two stages. In the first stage the curvature of the spine is ignored. In order to perform this comparison, a histogram with peaks at vertebral joint positions is created for the model at a particular scale. This is correlated with the histogram from the image shown in Figure 4 at a fixed scale for a range of positions and the position of the best match recorded. This process is repeated for different scaling values to give a best match value and its position for each. For a given scale, the start position which gives the best fit between the model and the data is identified and the best fit positions can be plotted as a function of scale and position in order to produce a graph of the type shown in Figure 5.

There are a number of techniques for determining the fit between the data and the model. The fitting technique used to generate the estimates of fit (that were subsequently used to find the highest estimate for each scale as a function of start position as shown in Figure 5) used a convolution process. The positions of the intervertebral regions in the model can (at least for fitting purposes) be represented as symmetric shapes (such as half a cycle of a sinusoid) of finite width. These can then be convolved with the histogram representation of the data. The relative offset (i.e. start position) between the model and the data is swept between predetermined limits for various scaling factors of the model, thereby giving a plurality of fitting values as the offset is varied for each scale (scale being kept constant). The largest fitting value for each scale is identified and its position plotted as in Figure 5. The process is then repeated for a new scale value so as to build up the graph shown in Figure 5.

The model may fit the data well at several combinations of scale and position with no single combination having a quality of fit significantly better than the others. This is because the length of the vertebrae increases steadily along the spine 2 from neck to tail. Therefore, changing the scale of the model merely means that it will fit well at a different position. As the scale increases, the position at which the best fit occurs remains roughly constant for a while (actually decreasing slightly) and then changes suddenly as the model fits better one vertebra further along the spine path. If the position of best fit is plotted against scale, the resulting graph has the form of a staircase. The near-vertical parts occur when the best fit is shifting between two positions. The centres of the near horizontal parts 20-28, are therefore the best combinations of scale and position. This process yields a small number of sets of scales and positions along the spine path at which the joints of the model vertebrae coincide well with the intervertebral bands in the image. It remains only to choose one of these combinations.

This selection can be performed by comparing the angle information from the model and spine path in a second fitting operation. The angles of sections of the spine path corresponding to vertebrae are found and compared with the joint angles of the model for each scale/position option 20-28 identified in the first stage. The option with the best match is the one which correctly maps the model onto the spine in the image of the half-carcass.

If linear regression is performed between the sets of angles for the image and the (correct) model, the intercept value gives the angle which must be added to all of the model joint angles to map the model onto the image spine and the slope value is a measure of the relative curve of the image spine with respect to the model, i.e. how much to multiply the model angles by in order for the amount of curvature to match.

Further relationships between anatomical features can be used to help in the fitting process, for example, at the cranial end, the positions of the Atlas vertebra, fore leg, sternum bones, first rib, or the most curved portion of the spine could be used to select the model fit which correctly locates the cranial end of the spine. Similarly, at the caudal end, the positions of the aitch bone, tail, rectum, or of particular curves in the outer edge of the carcass would be suitable to select the model fit which correctly locates the caudal end of the spine.

Information enabling one end of the spine (cranial or caudal) to be located allows the vertebrae to be counted off from that end so that the position of the nth vertebra from that end can be determined (where n is a positive integer).

However, since the number of vertebrae in the spine may vary (at least in pigs which may have between 26 and 29 vertebrae inclusive between the Atlas and lumbar vertebrae), it is necessary to have approximate indications of the positions of both ends of the spine if the number of vertebrae is to be determined and an appropriate model chosen so that the vertebral positions can be correctly related to anatomical features for the full length of the spine.

The shape of the spine and the amount thereof which is visible, varies from carcass to carcass. It is therefore desirable to have a measure of confidence in the spine path identification.

There are various possibilities. Firstly, the results of the first operation indicate how well the image matches the ideal spine image. These values could be read along the spine-path to give a measure of confidence for different sections of the spine. Alternatively, the spine-path could be searched for sudden changes of direction. Since the spine generally curves smoothly, a sudden deviation would indicate that the spine-path was going off track.

The processing steps can be performed by a suitably programmed data processor or a trained neural network. Once the path of the spine has been identified, the information can be used in the control of an automated butchery feature.

## Claims

1. A method of identifying regions of a spine (2) in a half-carcass, characterised by analysing an image of the half-carcass to identify the positions of a plurality of vertebral features (4) along a spine (2), and comparing the positions of the vertebral features (4) with a model of a spine so as to identify the best match between the measured positions and the model.

2. A method as claimed in claim 1, characterised in that the vertebral features are intervertebral regions (4) of the spine.

3. A method as claimed in claim 1 or 2, characterised in that the positions of the vertebral features are compared with the model as a function of relative longitudinal displacement and scale of the model data with respect to the measured positions.

4. A method as claimed in any one of the preceding claims, characterised in that the path of the spine (2) is identified by analysing the image of the half-carcass to identify areas thereof containing a predetermined feature, or features, considered to correspond to the spine (2), and analysing the spatial relationship of the identified areas to select those corresponding to an expected shape or position of the spine.

5. A method as claimed in claim 4, characterised in that spine-like features are identified by comparing a plurality of portions with a first reference image of a vertebral section.

6. A method as claimed in claim 4 or 5, characterised in that the spine is identified by identifying the spine-like features which form a substantially continuous sequence of such features.

7. A method as claimed in claim 2 or in any one of claims 3 to 6 when dependent on claim 2, characterised in that the positions of intervertebral regions are identified by searching along the path of the spine after the path of the spine has been determined.

8. A method as claimed in claim 2 or in any one of claims 3 to 7 when dependent on claim 2, characterised in that the intervertebral regions are identified by comparing a plurality of portions of the spine with a second reference image corresponding to the intervertebral region, or by analysing the intensity and/or colour of the image along the path of the spine.

9. A method as claimed in claim 8, characterised in that reference image is selected or rotated so as to be perpendicular to a local gradient of the spine, or in which the image intensity is averaged along short paths which are perpendicular to the local gradient of the spine.

10. A method as claimed in any one of the preceding claims, characterised in that the model represents the spine as a series of vertebra lengths.

11. A method as claimed in claim 10, characterised in that a first fit is performed comparing various offsets and scales of the vertebral model with the measured intervertebral positions to determine one or more acceptable fits between the data and the model.

12. A method as claimed in claim 11, characterised in that further data, comprising one or more of the curvature of the spine, the length of the carcass, the position of the Atlas vertebra, the positions of legs, the positions of ribs, the position of the aitch bone, the position of sternum bones, the position of the tail, the position of the rectum or the profile of the outer edge of the carcass, are used to constrain or refine the fit.

13. A method as claimed in claim 4, characterised in that pixel intensity values, where each value represents the closeness of the match between the first test image and the image of the half carcass, are accumulated across the image by setting the value of each pixel to consist of a weighted sum of its own value and the sums of neighbouring pixels of a preceding column of pixels.

14. A method as claimed in any one of the preceding claims, characterised in that instructions for controlling an automatic butchery machine are generated once the path of the spine and intervertebral positions in the carcass have been identified.

15. An apparatus for identifying regions of a spine (2) in a half carcass, characterised by analysing means for analysing an image at the half carcass to identify the positions of a plurality of vertebral features along the spine, and means for comparing the positions of the vertebral features with a model of the spine (2) so as to identify an acceptable match between the measured positions and the model.
